# EUROPÄISCHE PATENTSCHRIFT

(11) **EP 1 984 288 B1**
(45) Veröffentlichungstag und Bekanntmachung des Hinweises auf die Patenterteilung: **21.08.2013**
(21) Anmeldenummer: 07702803.3
(22) Anmeldetag: 17.01.2007
(51) Int. Cl.: B66C 23/78, B60S 9/04

(54) **FAHRBARE ARBEITSMASCHINE MIT STÜTZBEINEN**
MOBILE MACHINE WITH SUPPORTING LEGS
MACHINE DE TRAVAIL MOBILE COMPRENANT DES JAMBES DE SOUTIEN

(30) Priorität: 14.02.2006 DE 102006006978
(43) Veröffentlichungstag der Anmeldung: 29.10.2008
(73) Patentinhaber: Putzmeister Engineering GmbH, 72631 Aichtal (DE)
(72) Erfinder: FÜGEL, Dietmar, 72649 Wolfschlugen (DE); STIRM, Christian, 73773 Aichwald (DE)
(74) Vertreter: Wolf, Eckhard
(86) Internationale Anmeldenummer: PCT/EP2007/000346
(87) Internationale Veröffentlichungsnummer: WO 2007/093255

(56) Entgegenhaltungen:
- WO-A-02/49954
- FR-A- 2 600 599
- GB-A- 1 128 109
- GB-A- 1 173 785

## Beschreibung

Die Erfindung betrifft eine fahrbare Arbeitsmaschine mit einem Fahrgestell, das mindestens vier paarweise zu einer Radachse gehörende Räder aufweist mit mindestens zwei paarweise seitlich am Fahrgestell angeordneten Stützbeinen, die ein am Fahrgestell oder an einem Fahrgestellausleger über eine vorzugsweise horizontale Schwenkachse angelenktes Ausschubrohr und ein vorzugsweise mit hydraulischen Mitteln nach unten teleskopartig ausfahrbares, bodenseitig abstützbares Fußteil aufweisen, wobei das Ausschubrohr nach Art eines zweiarmigen Hebels unter Bildung eines bezüglich der Schwenkachse unteren, das Fußteil enthaltenden Hebelarms und eines oberen Hebelarms ausgebildet ist.

Fahrbare Arbeitsmaschinen, wie fahrbare Betonpumpen, müssen an der Arbeits- oder Baustelle stabil auf dem Untergrund aufgestellt werden. Hierzu dienen die im Bereich der Vorder- und/oder Hinterachsen angeordneten Stützbeine. Arbeitsmaschinen der eingangs angegebenen Art sind beispielsweise bekannt aus der WO02/49954.

Der Erfindung liegt die Aufgabe zugrunde, eine fahrbare Arbeitsmaschine der eingangs angegebenen Art dahingehend zu verbessern, dass die Handhabung der Stützbeine beim Ausschwenkvorgang erleichtert und ihre Abstützung am Fahrgestell verbessert werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung wird im Wesentlichen darin gesehen, dass der obere Hebelarm im Bereich seines freien Endes in eine Führungskulisse eingreift, deren eines Ende einen Endanschlag bildet. Mit diesen Maßnahmen wird eine besonders vorteilhafte Ableitung der Stützkräfte im ausgestellten Zustand der Stützbeine erzielt.

Die Schwenkachse der Stützbeine ist zweckmäßig schräg zur Fahrgestelllängsachse ausgerichtet, wobei vorteilhafterweise die einander paarweise zugeordneten Schwenkachsen der vorderen Stützbeine in Fahrtrichtung des Fahrgestells konvergieren. Damit wird erreicht, dass die vorderen Stützbeine bezüglich des Fahrgestells schräg nach vorne ausgeklappt werden.

Eine weitere bevorzugte Ausgestaltung der Erfindung sieht vor, dass an dem oberen Hebelarm des Ausschubrohrs eine vorzugsweise als Gasdruckfeder ausgebildete Druckfeder angreift. Die Druckfeder ist dabei zweckmäßig so angeordnet, dass der Hebelarm auf dem Schwenkweg des Stützbeins zwischen der eingeklappten und der ausgeklappten Endstellung einen Totpunkt überwindet. Damit kann erreicht werden, dass der Hebelarm sowohl in der eingeklappten als auch in der ausgeklappten Endstellung des Stützbeins unter der Einwirkung der Druckfeder in einer stabilen Anschlaglage vorgespannt ist.

Weiter hat es sich als besonders vorteilhaft erwiesen, wenn der Schwenkwinkel der Stützbeine um die Schwenkachse 20° bis 30° beträgt. Vorteilhafterweise trägt das Fußteil eine starre Fußplatte, die gegenüber der Ausfahrrichtung des Fußteils um einen dem Schwenkwinkel entsprechenden Winkel geneigt ist. Grundsätzlich ist es möglich, dass die Fußplatte über ein Fußgelenk am Fußteil verschwenkbar angeordnet ist.

Zur leichteren Handhabung weist das Ausschubrohr des Stützbeins einen in Ausschwenkrichtung weisenden Handgriff auf.

Um eine höhere Betriebssicherheit zu erhalten, ist das Stützbein sowohl in der eingeklappten als auch in der ausgeklappten Stellung gegenüber dem Fahrgestell in seiner Schwenklage arretierbar. Hierzu ist am Fahrgestell ein mit dem Schwenkbein verriegelbarer Riegelmechanismus vorgesehen.

Im Folgenden wird die Erfindung anhand der in der Zeichnung in schematischer Weise dargestellten Ausführungsbeispiele näher erläutert. Es zeigen
- Fig. 1a: und b eine Seitenansicht einer Autobetonpumpe in Fahrstellung und in angehobener Betriebsstellung;

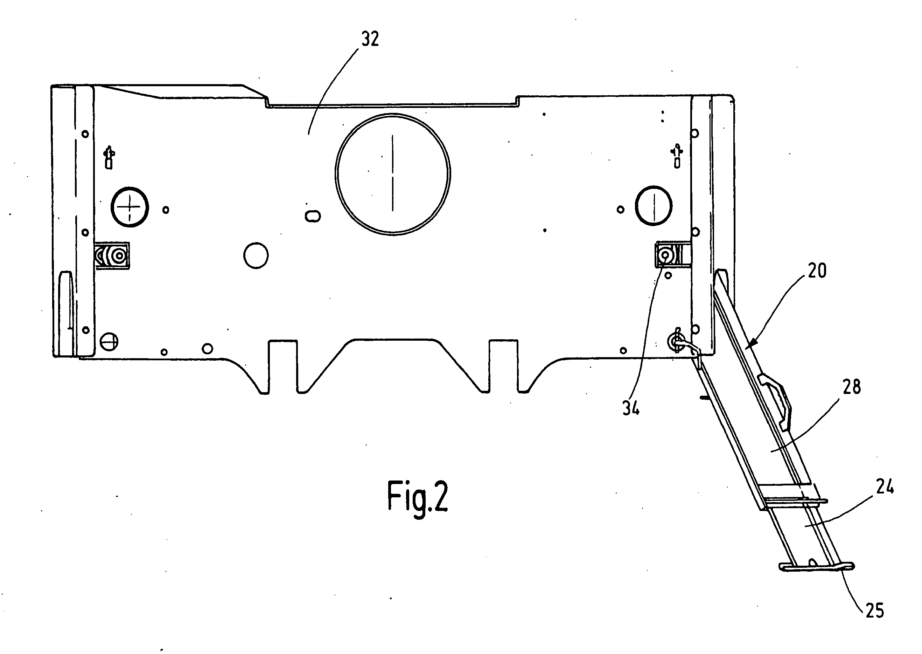

- Fig. 2: eine Frontansicht einer fahrgestellfesten Traverse mit ausgeschwenktem Stützbein und eingezogenem Fußteil;

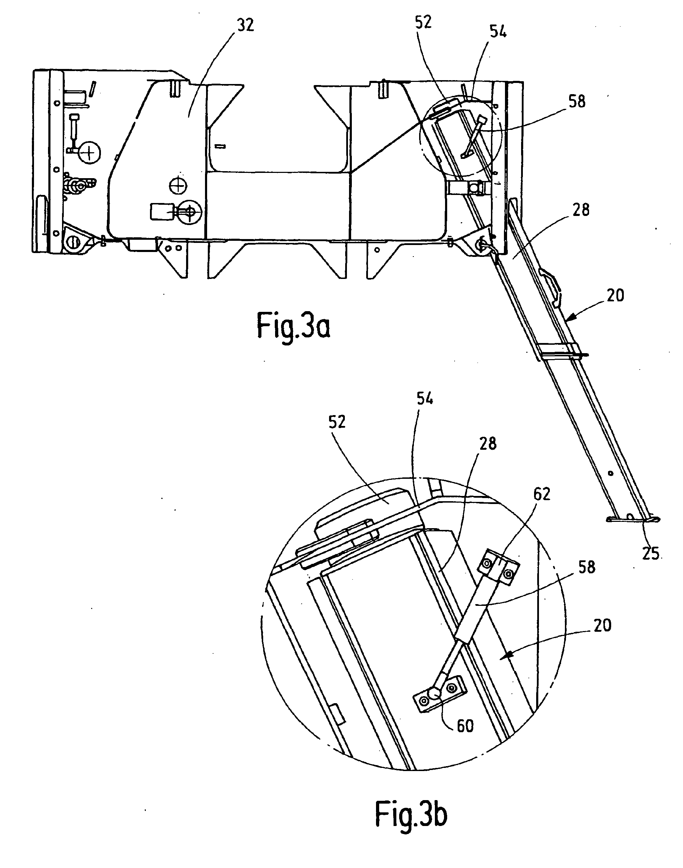

- Fig. 3a: eine teilweise aufgebrochene Frontansicht der fahrgestellfesten Traverse mit ausgestelltem Stützbein und ausgefahrenem Fußteil;
- Fig. 3b: ein Detail aus Fig. 3a im Bereich der Gasdruckfeder;

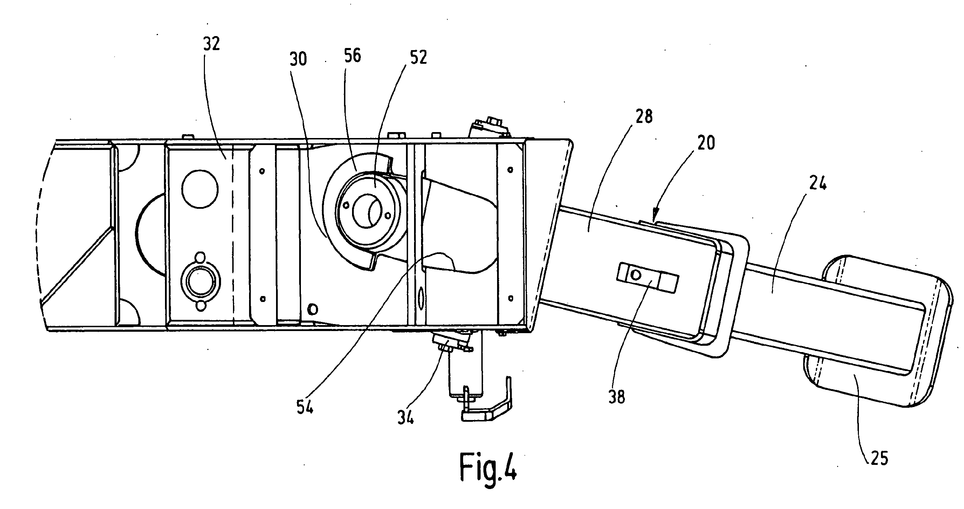

- Fig. 4: eine Draufsicht auf die fahrgestellfeste Traverse mit ausgeschwenktem Stützbein;
- Fig. 5: eine schaubildliche Darstellung der Traverse mit ausgestelltem Stützbein in Seitenansicht;
- Fig. 6: einen Schnitt entlang der Schnittlinie A-A der Fig. 5.

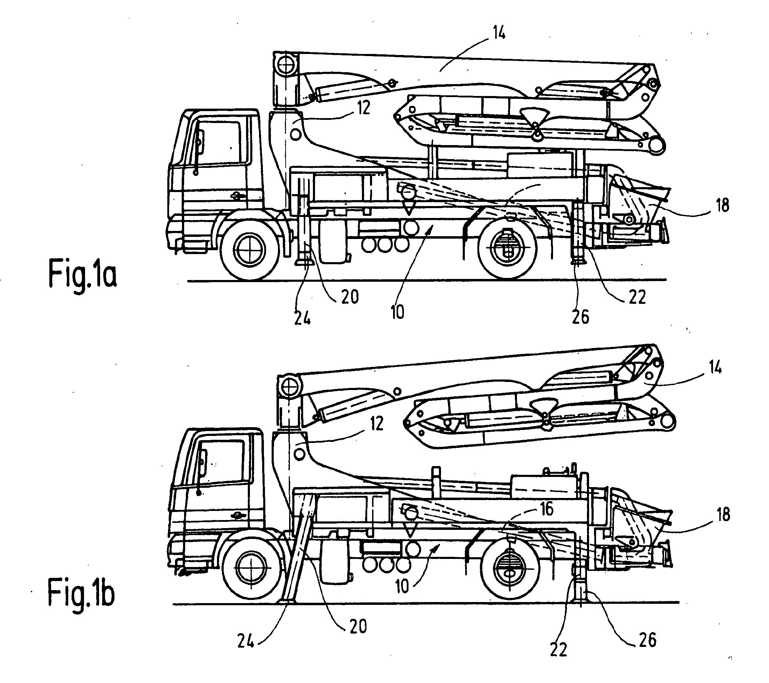

Die in Fig. 1a in Fahrstellung und in Fig. 1b in der angehobenen Betriebsstellung dargestellte Autobetonpumpe besteht im Wesentlichen - aus einem zweiachsigen Fahrgestell 10, einem an einem vorderachsnahen Mastbock 12 um eine vertikale Achse drehbar gelagerten Betonverteilermast 14 einer Dickstoffpumpe 16 mit Materialaufgabebehälter 18 und einer aus zwei vorderen und zwei rückwärtigen Stützbeinen 20,22 bestehenden Stützkonstruktion. Die Stützbeine 20,22 sind mit je einem nach unten ausfahrbaren Fußteil 24,26 unter Anheben des Fahrgestells 10 auf dem Boden 27 abstützbar (Fig. 1 b). Im ausgefahrenen Zustand der Fußteile 24,26 sind die Räder 11 des Fahrgestells vom Boden 27 abgehoben.

Die dargestellte Stützkonstruktion ist vor allem für kleine Betonverteilermaste mit einer Reichweite von bis zu 25 m bestimmt. Die vorderen Stützbeine 20 greifen mit ihrem oberen, als Ausschubrohr 28 ausgebildeten Teleskopsegment in einen Hohlraum 30 eines fahrgestellfesten, traversenartigen Aufbaus 32 ein und sind dort um eine im Wesentlichen horizontale Schwenkachse 34 zwischen einer eingeklappten Fahrstellung und einer ausgeklappten Arbeitsstellung schwenkbar gelagert. Die Schwenkachsen 34 sind gegenüber der Fahrgestelllängsachse so schräg ausgerichtet, dass die vorderen Stützbeine 20 mit ihrem Fußteil in Fahrtrichtung schräg nach vorn weisend ausgeschwenkt werden. Ein von Hand betätigbarer Riegelmechanismus 36 sorgt dafür, dass die vorderen Stützbeine 20 sowohl in der eingeklappten als auch in der ausgeklappten Endstellung am fahrgestellfesten Aufbau 32 arretiert werden. Auch das Verschwenken der Stützbeine 20 erfolgt von Hand. Deshalb ist am Ausschubrohr 28 der Stützbeine 20 jeweils ein nach außen weisenden Handgriff 38 angeordnet.

Eine Besonderheit der Erfindung besteht darin, dass das Ausschubrohr 28 nach Art eines zweiarmigen Hebels unter Bildung eines bezüglich der Schwenkachse 34 unteren, das Fußteil 24 enthaltenden Hebelarms 40 und eines oberen Hebelarms 42 ausgebildet ist. Das Fußteil 24 ist unter der Einwirkung eines Hydrozylinders 44 im Bereich des unteren Hebelarms 40 des Ausschubrohrs 28 teleskopartig verschiebbar. Zu diesem Zweck ist der Hydrozylinder 44 mit dem rückwärtigen Ende 46 seines Zylinders im Bereich der Schwenkachse 34 des Ausschubrohrs 28 und mit dem Ende 48 seiner Stange 50 am Fußteil 24 fixiert. Der obere Hebelarm 42 des Ausschubrohrs 28 greift mit einem rückwärtig überstehenden Gleitschuh 52 in eine fahrgestellfeste Führungskulisse 54 ein, die an ihrem einen Ende einen Anschlag 56 für den Gleitschuh 52 und damit für die Übertragung der Stützkräfte im ausgestellten Zustand des Stützbeins 20 bildet. Die Schwenkbewegungen der vorderen Stützbeine 20 zwischen der eingeklappten und der ausgeklappten Endstellung ist federunterstützt. Zu diesem Zweck ist am oberen Hebelarm 42 eine Gasdruckfeder 58 mit ihrem einen Ende 60 angelenkt, die mit ihrem anderen Ende 62 gestellfest angelenkt ist. Die Gasdruckfeder 58 ist dabei so ausgerichtet, dass beim Ausklappvorgang ein Totpunkt durchlaufen wird. Dadurch wird erreicht, dass das Stützbein 20 sowohl in der eingeklappten als auch in der ausgeklappten Endstellung in einer stabilen Anschlaglage positioniert ist. Die Gasdruckfeder 58 hat vor allem die Funktion einer die Gewichtskraft des Stützbeins 20 beim Ausschwenken eliminierenden Ausschwenkhilfe.

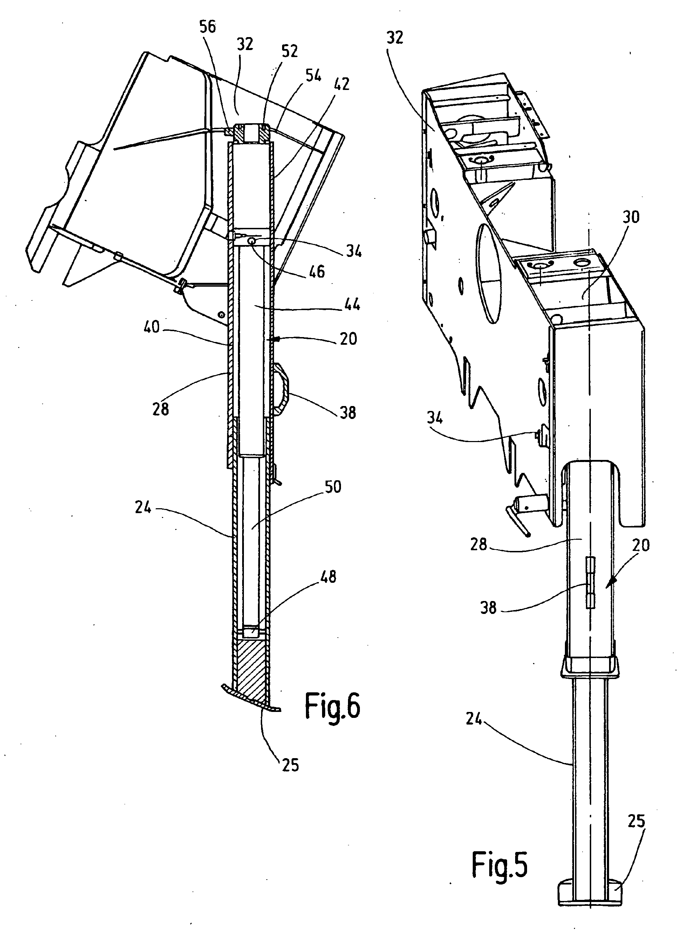

Der Schwenkwinkel der vorderen Stützbeine beträgt bei dem gezeigten Ausführungsbeispiel ca. 25° (vgl. Fig. 6). Dementsprechend ist die am Fußteil starr angeordnete Fußplatte 25 gegenüber der Ausfahrrichtung der Fußteils um einen dem Schwenkwinkel entsprechenden Winkel geneigt. Die Fußplatte 25 steht im ausgeschwenkten Zustand flächig auf einer ebenen Unterlage auf. Grundsätzlich ist es möglich, anstelle der starren Fußplatte 25 auch eine beschränkt gelenkige Fußplatte 25 zu verwenden, die sich beim Aufstellen auf eine Unterlage automatisch an die Oberfläche der Unterlage anpasst.

Zusammenfassend ist folgendes festzuhalten: Die Erfindung bezieht sich auf eine fahrbare Arbeitsmaschine, insbesondere eine Autobetonpumpe. Die Arbeitsmaschine umfasst ein Fahrgestell 10, das mindestens vier paarweise zu einer Radachse gehörende Räder 11 aufweist. Weiter sind mindestens zwei paarweise seitlich am Fahrgestell angeordnete Stützbeine 20 vorgesehen, die ein am Fahrgestell 10 angelenktes, als Ausschubrohr 28 ausgebildetes Teleskopsegment und ein vorzugsweise mit hydraulischen Mitteln nach unten teleskopartig ausfahrbares, bodenseitig abstützbares Fußteil 24 aufweisen. Um eine einfache Handhabung des Abstützmechanismus zu gewährleisten, wird gemäß der Erfindung vorgeschlagen, dass das Ausschubrohr 28 der Stützbeine 20 nach Art eines zweiarmigen Hebels unter Bildung eines bezüglich der Schwenkachse 34 unteren, das Fußteil 24 enthaltenden Hebelarms 40 und eines oberen, vorzugsweise in Ausschwenkrichtung federunterstützten Hebelarms 42 ausgebildet ist.

## Patentansprüche

1. Fahrbare Arbeitsmaschine mit einem Fahrgestell (10), mit mindestens zwei paarweise seitlich am Fahrgestell angeordneten Stützbeinen (20), die ein an einer fahrgestellfesten Stelle angelenktes Ausschubrohr (28) und ein vorzugsweise mit hydraulischen Mitteln (44) nach unten teleskopartig ausfahrbares, bodenseitig abstützbares Fußteil (24) aufweisen, wobei das Ausschubrohr (28) nach Art eines zweiarmigen Hebels unter Bildung eines bezüglich einer Schwenkachse (34) unteren, das Fußteil (24) enthaltenden Hebelarms (40) und eines oberen Hebelarms (42) ausgebildet ist, **dadurch gekennzeichnet, dass** der obere Hebelarm (42) im Bereich seines freien Endes (52) in eine Führungskulisse (54) eingreift, deren eines Ende einen Endanschlag (56) bildet.

2. Fahrbare Arbeitsmaschine nach Anspruch 1, **dadurch gekennzeichnet, dass** die Schwenkachse (34) schräg zur Fahrgestelllängsachse ausgerichtet ist.

3. Fahrbare Arbeitsmaschine nach Anspruch 1 oder 2, **dadurch gekennzeichnet, dass** die Schwenkachsen (34) der vorderen Stützbeine (20) in Fahrtrichtung des Fahrgestells konvergieren, so dass die vorderen Stützbeine im ausgeschwenkten Zustand schräg nach vorne weisen.

4. Fahrbare Arbeitsmaschine nach einem der Ansprüche 1 bis 3, **dadurch gekennzeichnet, dass** das Stützbein (20) in Ausschwenkrichtung federunterstützt ist.

5. Fahrbare Arbeitsmaschine nach einem der Ansprüche 1 bis 4, **dadurch gekennzeichnet, dass** am Ausschubrohr (28) des Stützbeins (20) im Bereich des oberen Hebelarms (42) eine vorzugsweise als Gasdruckfeder (58) ausgebildete Druckfeder angreift.

6. Fahrbare Arbeitsmaschine nach Anspruch 5, **dadurch gekennzeichnet, dass** das Stützbein (20) auf seinem Schwenkweg zwischen der eingeklappten und der ausgeklappten Endstellung einen Totpunkt der Druckfeder (58) überwindet.

7. Fahrbare Arbeitsmaschine nach einem der Ansprüche 5 bis 6, **dadurch gekennzeichnet, dass** das Stützbein (20) sowohl in der eingeklappten als auch in der ausgeklappten Endstellung unter der Einwirkung der Druckfeder gegen einen Anschlag oder eine Rastposition vorgespannt ist.

8. Fahrbare Arbeitsmaschine nach einem der Ansprüche 1 bis 7, **dadurch gekennzeichnet, dass** der untere Hebelarm (40) des Ausschubrohrs (28) länger als der obere Hebelarm (42) ist.

9. Fahrbare Arbeitsmaschine nach einem der Ansprüche 1 bis 8, **dadurch gekennzeichnet, dass** der obere Hebelarm (42) im Bereich seines freien Endes (52) im ausgeschwenkten Zustand des Stützbeins (20) gegen einen fahrgestellfesten Endanschlag (56) anliegt.

10. Fahrbare Arbeitsmaschine nach einem der Ansprüche 1 bis 9, **dadurch gekennzeichnet, dass** der Schwenkwinkel der Stützbeine (20) um die Schwenkachse (34) 20° bis 30° beträgt.

11. Fahrbare Arbeitsmaschine nach Anspruch 10, **dadurch gekennzeichnet, dass** das Fußteil (24) eine starre Fußplatte (25) trägt, die gegenüber der Ausfahrrichtung des Fußteils um einen dem Schwenkwinkel entsprechenden Winkel geneigt ist.

12. Fahrbare Arbeitsmaschine nach einem der Ansprüche 1 bis 10, **dadurch gekennzeichnet, dass** das Fußteil (24) eine über ein Fußgelenk begrenzt verschwenkbare Fußplatte (25) trägt.

13. Fahrbare Arbeitsmaschine nach einem der Ansprüche 1 bis 12, **dadurch gekennzeichnet, dass** auf der Außenseite des Ausschubrohrs ein in Ausschwenkrichtung weisender Handgriff (38) angeordnet ist.

14. Fahrbare Arbeitsmaschine nach einem der Ansprüche 1 bis 13, **dadurch gekennzeichnet, dass** das Stützbein (20) sowohl in der eingeklappten als auch in der ausgeklappten Stellung gegenüber dem Fahrgestell mittels eines vorzugsweise handbetätigten Riegelmechanismus arretierbar ist.

## Claims

1. Mobile work machine having a chassis (10), having at least two support legs (20) disposed laterally on the chassis, in pairs, which legs have an extension tube (28) articulated onto a location on the chassis, and a foot part (24) that can be extended downward, in telescope-like manner, and supported on the ground, preferably by hydraulic means (44), whereby the extension tube (28) is configured in the manner of a two-arm lever, forming a lower lever arm (40), with reference to a pivot axis (34), which contains the foot part (24), and an upper lever arm (42), **characterized in that** the upper lever arm (42) engages into a guide link (54) in the region of its free end (52), the one end of which link forms an end stop (56).

2. Mobile work machine according to claim 1, **characterized in that** the pivot axis (34) is oriented at a slant to the longitudinal chassis axis.

3. Mobile work machine according to claim 1 or 2, **characterized in that** the pivot axes (34) of the front support legs (20) converge in the travel direction of the chassis, so that the front support legs point forward at a slant in the pivoted-out state.

4. Mobile work machine according to one of claims 1 to 3, **characterized in that** the support leg (20) is spring-supported in the pivoting-out direction.

5. Mobile work machine according to one of claims 1 to 4, **characterized in that** a pressure spring preferably configured as a gas pressure spring (58) engages onto the extension tube (28) of the support leg (20) in the region of the upper lever arm (42).

6. Mobile work machine according to claim 5, **characterized in that** the support leg (20) overcomes a dead point of the pressure spring (58) on its pivot path between the folded-in and the folded-out end position.

7. Mobile work machine according to one of claims 5 to 6, **characterized in that** the support leg (20) is biased against a stop or a catch position under the effect of the pressure spring, both in the folded-in and in the folded-out end position.

8. Mobile work machine according to one of claims 1 to 7, **characterized in that** the lower lever arm (40) of the extension tube (28) is longer than the upper lever arm (42).

9. Mobile work machine according to one of claims 1 to 8, **characterized in that** the upper lever arm (42) rests against an end stop (56) affixed to the chassis in the region of its free end (52), in the pivoted-out state of the support leg (20).

10. Mobile work machine according to one of claims 1 to 9, **characterized in that** the pivot angle of the support legs (20) about the pivot axis (34) amounts to 20° to 30°.

11. Mobile work machine according to claim 10, **characterized in that** the foot part (24) carries a rigid foot plate (25), which is inclined by an angle that corresponds to the pivot angle, relative to the extension direction of the foot part.

12. Mobile work machine according to one of claims 1 to 10, **characterized in that** the foot part (24) carries a foot plate (25) that can pivot in limited manner, by way of a foot joint.

13. Mobile work machine according to one of claims 1 to 12, **characterized in that** a handle (38) that points in the pivoting-out direction is disposed on the outside of the extension tube.

14. Mobile work machine according to one of claims 1 to 13, **characterized in that** the support leg (20) can be locked in place relative to the chassis, by means of a preferably manually activated locking mechanism, both in the folded-in and in the folded-out position.

## Revendications

1. Machine mobile de travail équipée d'un châssis de roulement (10) muni d'au moins deux jambes d'appui (20) qui sont agencées par paires, sur les côtés dudit châssis de roulement, et comprennent une tubulure escamotable (28) articulée sur une zone assujettie audit châssis de roulement, et une partie d'embase (24) pouvant prendre appui côté sol et déployable télescopiquement vers le bas, de préférence à l'aide de moyens hydrauliques (44), la tubulure escamotable (28) étant réalisée à la manière d'un levier à deux bras, avec formation d'un bras de levier (40) incluant la partie d'embase (24) et inférieur par rapport à un axe de pivotement (34), et un bras de levier (42) supérieur, **caractérisée par le fait que** le bras de levier (42) supérieur pénètre, dans la région de son extrémité libre (52), dans une coulisse de guidage (54) dont l'une des extrémités forme une butée extrême (56).

2. Machine mobile de travail selon la revendication 1, **caractérisée par le fait que** l'axe de pivotement (34) est orienté à l'oblique vis-à-vis de l'axe longitudinal du châssis de roulement.

3. Machine mobile de travail selon la revendication 1 ou 2, **caractérisée par le fait que** les axes de pivotement (34) des jambes d'appui (20) antérieures convergent dans la direction de déplacement du châssis de roulement, de sorte que lesdites jambes d'appui antérieures pointent à l'oblique vers l'avant à l'état sorti par pivotement.

4. Machine mobile de travail selon l'une des revendications 1 à 3, **caractérisée par le fait que** la jambe d'appui (20) est soutenue élastiquement dans la direction d'excursion pivotante.

5. Machine mobile de travail selon l'une des revendications 1 à 4, **caractérisée par le fait qu'**un ressort de pression, réalisé de préférence sous la forme d'un ressort (58) à pression gazeuse, vient en prise avec la tubulure escamotable (28) de la jambe d'appui (20) dans la région du bras de levier (42) supérieur.

6. Machine mobile de travail selon la revendication 5, **caractérisée par le fait que** la jambe d'appui (20) neutralise l'action d'un point mort du ressort de pression (58) sur son trajet de pivotement entre les positions extrêmes escamotée par pivotement, et déployée par pivotement.

7. Machine mobile de travail selon l'une des revendications 5 à 6, **caractérisée par le fait que** la jambe d'appui (20) est précontrainte vers une butée ou vers un emplacement de crantage, sous l'action du ressort de pression, dans les positions extrêmes aussi bien escamotée par pivotement, que déployée par pivotement.

8. Machine mobile de travail selon l'une des revendications 1 à 7, **caractérisée par le fait que** le bras de levier (40) inférieur de la tubulure escamotable (28) est plus long que le bras de levier (42) supérieur.

9. Machine mobile de travail selon l'une des revendications 1 à 8, **caractérisée par le fait que**, lorsque la jambe d'appui (20) se trouve à l'état sorti par pivotement, le bras de levier (42) supérieur est en applique, dans la région de son extrémité libre (52), contre une butée extrême (56) assujettie au châssis de roulement.

10. Machine mobile de travail selon l'une des revendications 1 à 9, **caractérisée par le fait que** l'angle de pivotement des jambes d'appui (20), autour de l'axe de pivotement (34), mesure de 20° à 30°.

11. Machine mobile de travail selon la revendication 10, **caractérisée par le fait que** la partie d'embase (24) porte une plaque rigide de semelle (25) inclinée, vis-à-vis de la direction de déploiement de ladite partie d'embase, d'un angle correspondant à l'angle de pivotement.

12. Machine mobile de travail selon l'une des revendications 1 à 10, **caractérisée par le fait que** la partie d'embase (24) porte une plaque de semelle (25) pouvant effectuer des pivotements limités, par l'intermédiaire d'une articulation de piètement.

13. Machine mobile de travail selon l'une des revendications 1 à 12, **caractérisée par le fait qu'**une poignée (38), pointant dans la direction d'excursion pivotante, est implantée à la face extérieure de la tubulure escamotable.

14. Machine mobile de travail selon l'une des revendications 1 à 13, **caractérisée par le fait que** la jambe d'appui (20) peut être arrêtée par rapport au châssis de roulement, dans les positions extrêmes aussi bien escamotée par pivotement, que déployée par pivotement, au moyen d'un mécanisme de verrouillage actionné de préférence à la main.
